# EUROPEAN PATENT APPLICATION

(11) **EP 1 153 793 A1**
(43) Date of publication of application: **14.11.2001**
(21) Application number: 00830346.3
(22) Date of filing: 12.05.2000
(51) Int. Cl.: B60Q 1/52

(54) **Crash alarm**

(71) Applicant: Malatesta Massimiliano, 47035 Gambettola (Forli) (IT)
(72) Inventor: Malatesta, Massimiliano, 47035 Gambettola (Forli) (IT); Mazzotti, Gianluca, 47035 Gambettola (Forli) (IT)

(57) **Abstract**

The device installed on vehicles will be activated (according to the entering or the leaving of the highway toll) by the external stationary device fitted near the entry and exit toll points.

Upon entering the highway with the activated device, an alarm signal will be emitted if another vehicle involved in an accident (within a range of two kilometres) switches on its "Crash Alarm" through the air bag sensor.

This alarm signal will be recognized by the driver through a sound signal inside the passenger compartment and by a light signal outside the car (double indicators lights alternatively to stop lights).

## Description

The mentioned invention named "CRASH ALARM" is a road safety device, fit to **prevent chain accidents**, in case of poor visibility (fog, darkness, rain, etc.) when a previous single accident has already occured ON HIGHWAYS PARTICULARLY.

The invention we are proposing is related to the driving field and more precisely to that of road safety.

According to our experience the state of current technology permits to warn other motorists only through light emergency devices (as double indicator lights), or transmitters like C.B. (used by most truckers).

The "**Crash alarm**" is an alarm system composed by two devices: the first one (**OUT**) is installed on highway enter and exit ramps ( set on a stationary pillar) picture 2(5) and picture 1(2).

The second device named (**IN**) is a unit installed inside the vehicle in a protected position in case of crash (as for instance next to the hand brake lever) picture 1(3) and picture 2 (4).

The part of the "**CRASH ALARM**" named (**OUT**) as indicated in the layout picture 3, is a short distance transmitter, picture 3(7) emitting a radio signal.

Its function is to activate or to deactivate the short distance. receiver picture 4 (8) inside the car through two kind of different signals (start and stop).

The part of the "Crash alarm" (IN) picture 4 is composed by: a short distance receiver (8) and by a long distance trans-receiver. (9).

The short distance receiver (8) can activate or deactivate the trans-receiver (9) according to the received signal.

When a vehicle enters the highway picture 5 (21) and overtakes the ***pillar*** (23), the trans-receiver (9) is activated, i.e. it is in a waiting or receiving position and it is ready to receive a signal from a car involved in an accident within a range of few kilometres.

At the highway exit the trans-receiver (9) installed inside the ***vehicle*** (20) is disactivated upon overtaking the pillar (24).

In the event the vehicle is directly involved in the accident picture 5(15) and (16), the air bag sensor (or similar) picture 4 (10) will automatically activate the trans -receiver (9) as to send a radio signal to all devices installed in the vehicles travelling on the highway within a range of two kilometers picture 5(17), (18), (19), (20) and (21); this signal will be emitted for about fifteen minutes, while the vehicles travelling on surrounding roads (22), in spite of their **crash alarm** installed on board, will not receive any signal as it had not been activated as previously illustrated, picture 5(21).

If the vehicles directly involved (15) (16) are not equipped with the "**Crash Alarm**" yet, the vehicles with such device on board arriving immediately (18) (19) can activate the crash signal manually, pushing the car horn together with the double indicators lights button, picture 4 (12), and also this signal will be emitted for about fifteen minutes long.

The device "**Crash Alarm**" will emit a sound alarm tone inside the car compartment , picture 4(14) in all the vehicles arriving from both directions, as to warn the drivers of the danger within a range of two kilometres and the double indicators lights will be switched on at the same time and alternatively to the stops lights, picture 4 (11).

The device has a signal power indicator, picture 4(13), fit to realize the distance from the top degree of the signal emitted from the accident place, picture 6(25) (26).

In case of receipt of an increasing danger signal without reaching the accident in one's own direction, the crash could be occurred on the opposite lane (28) or in the service area indicated as (29).

In case of receiving a decreasing alarm signal until it comes to an end, that means that the accident has happened behind the car(27).

The device "**Crash Alarm**", if mass-installed, has the purpose to limit the consequences of an accident occurred to only two cars without involving any other vehicles, such as in case of chain accidents generally due to poor visibility and particularly to fog.

The goal to limit accidents without involving other cars presents various benefits such as to rescue further human lives, to avoid repairs and replace costs for crashed cars, to reduce special maintenance costs of roads and finally to avoid aid and police costs.

The device will be surely made at a low price for the final customer if mass-produced and in a big quantity.

### SEQUENCE LISTING PART OF DESCRIPTION

1) Highway exit toll
2) Exit short distance transmitter (OUT)
3) Unit (IN) installed inside the leaving vehicle
4) Unit (IN) installed inside the entering vehicle
5) Entry short distance transmitter(OUT)
6) Highway entry toll
7) Short distance transmitter (layout)
8) Short distance receiver
9) Long distance trans-receiver
10) "Air bag" sensor or similar
11) Exit light signal (double indicators lights alternatively to stop lights)
12) Manual control (double indicators lights + horn push-button)
13) Reception signal indicator
14) Sound device (buzzer)
15) Vehicle involved in the accident
16) Vehicle involved in the accident
17) Vehicle travelling on the opposite way
18) Vehicle coming to the accident place
19) Vehicle coming to the accident place
20) Vehicle leaving through the toll (deactivated)
21) Vehicle entering through the toll (activated)
22) Vehicle travelling on country road or city street
23) Entry pillar (OUT)
24) Exit pillar (OUT)
25) Vehicle involved in the accident
26) Vehicle involved in the accident
27) Vehicle leaving the accident place
28) Vehicle coming to the accident place on the opposite lane
29) Service area

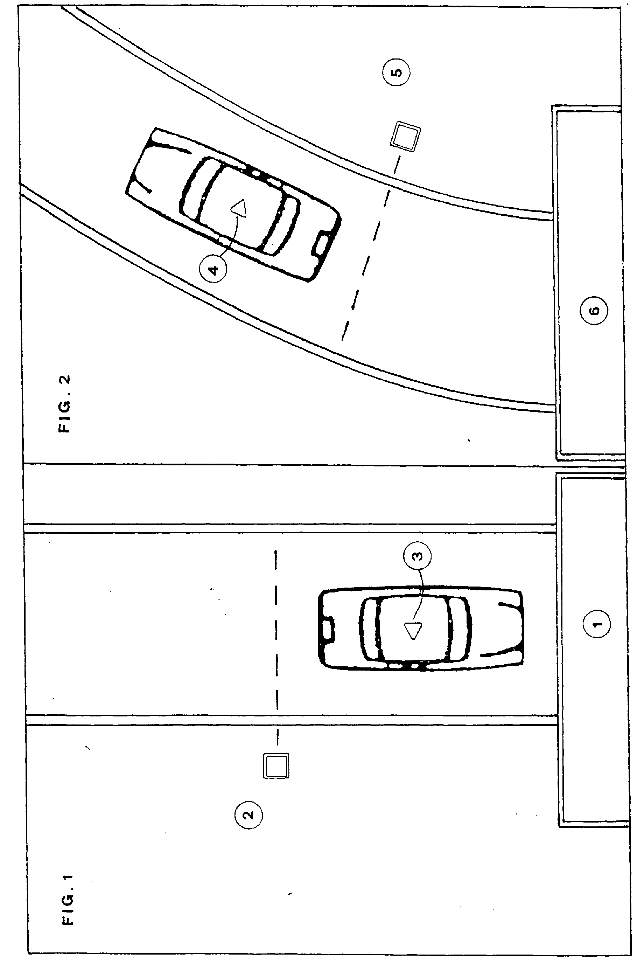

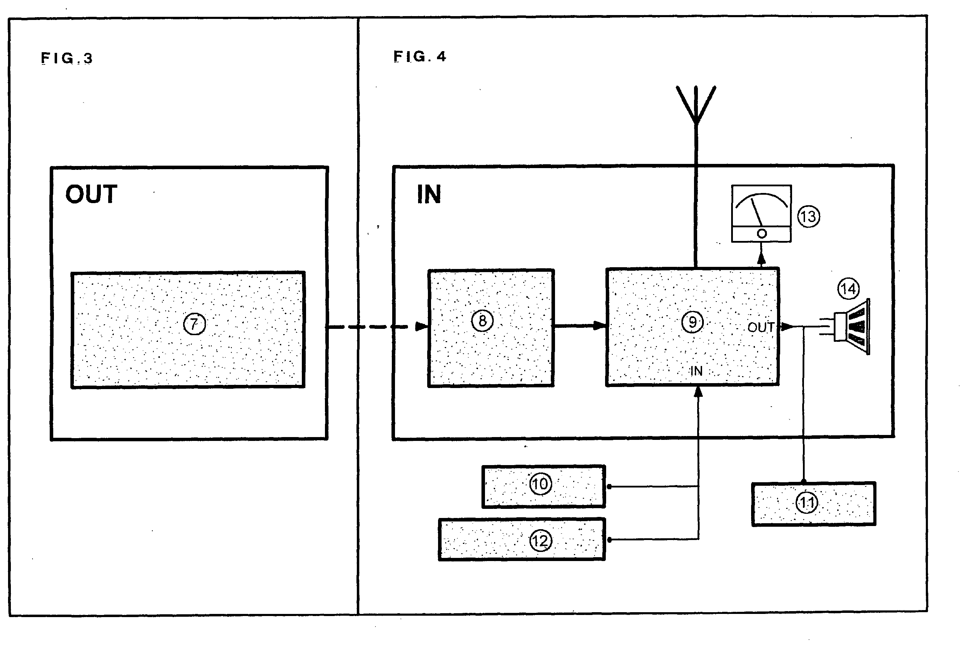

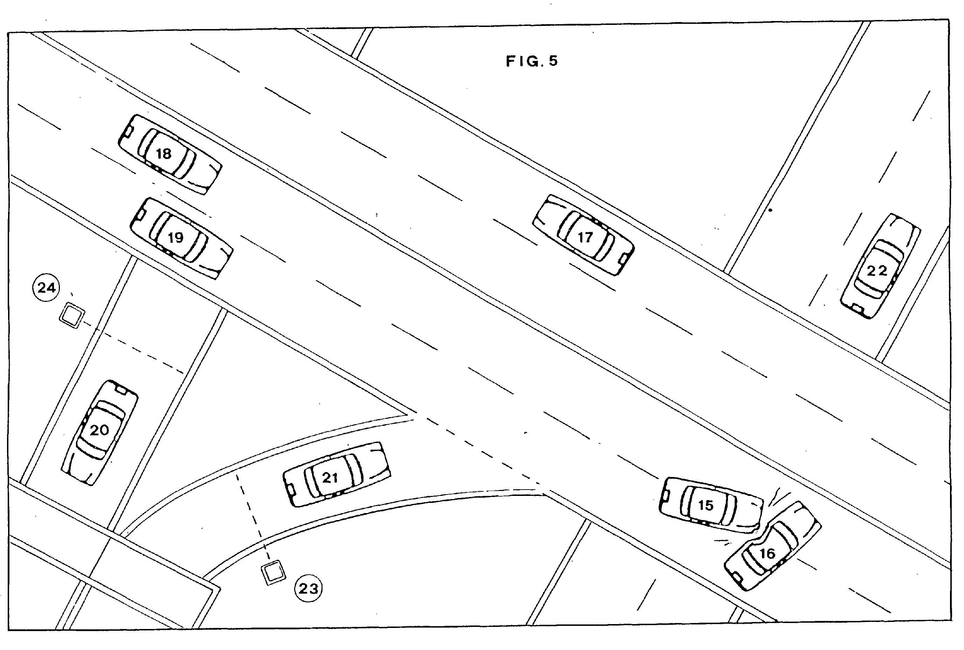

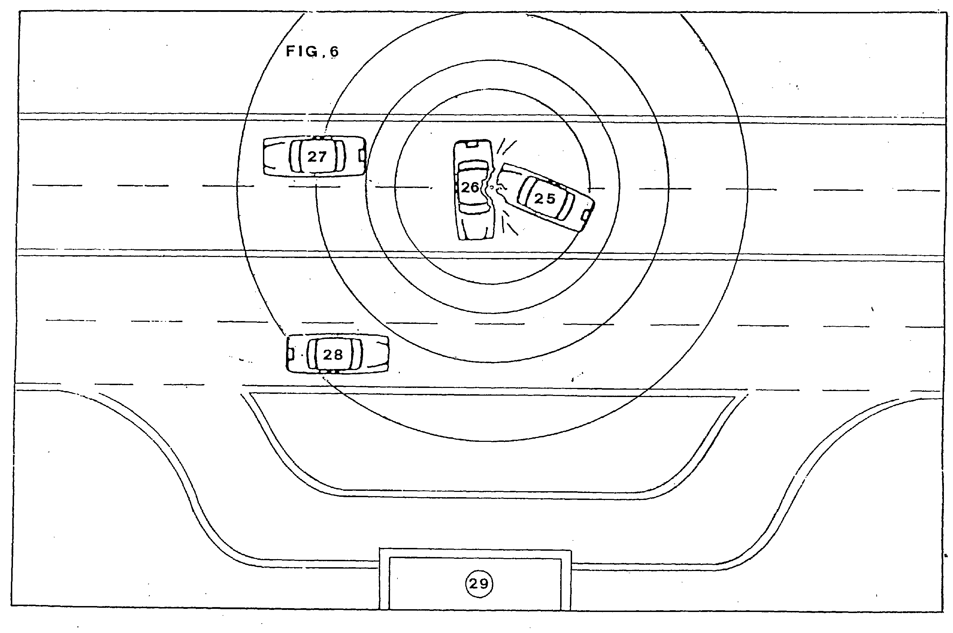

## Claims

1. The device can be activated/deactivated on every vehicle by a radio or short distance signal by the company managing the traffic net, for instance "highway department " at entry and exit toll points, picture 2(6) and picture 1(1).

2. At the moment of the crash, the air bag sensor (10) installed on the vehicle will also activate the alarm device (9) which will immediately transmit a danger signal timed for fifteen minutes within a range of two kilometres.

3. On the vehicles approaching the area of the crash (17) (18) (19), the device "crash alarm" will warn the driver of an accident in the closest surroundings by a sound signal inside (14) and by a light signal outside, in order to alarm the people following the car (11).

4. The device can be alarmed even manually, picture 4 (12) pushing the double indicators lights and the horn.

5. The danger signal is displayed also by a reception signal power indicator (13) suitable to know the distance existing from the accident place.

6. The received signal (of the accident occurred) is emitted only automatically and stops emitting after fifteen minutes inside the reception area, while it stops automatically out of the reception area.
